# EUROPEAN PATENT APPLICATION

(11) **EP 1 990 637 A2**
(43) Date of publication of application: **12.11.2008**
(21) Application number: 08155344.8
(22) Date of filing: 29.04.2008
(51) Int. Cl.: G01N 27/90

(54) **System and methods for inspecting internal cracks**

(30) Priority: 07.05.2007 US 745122
(71) Applicant: GENERAL ELECTRIC COMPANY, Schenectady, NY 12345 (US)
(72) Inventor: Wang, Changting, Niskayuna, NY 12309 (US); Nath, Shridhar Champaknath, Niskayuna, NY 12309 (US); Griffin, Weston Blaine, Niskayuna, NY 12309 (US); Fields, Michael Wayne, Loveland, OH 45140 (US); Hallman, Darren Lee, Clifton Park, NY 12065 (US); Al-Khalidy, Abdul Rahman Abdallah, Cohoes, NY 12047 (US)
(74) Representative: Bedford, Grant Richard

(57) **Abstract**

A method (60) for inspecting an internal cavity (44) in a part (12) is provided. The method (60) includes inserting (62) a probe (14) into the internal cavity (44). The method (60) also includes controlling (62) movement of the probe (14) using a defined scan path to scan the probe (14) over a region of interest in the internal cavity (44). The method (60) also includes applying (64) multiple multifrequency excitation signals to the probe (14) to generate a number of multifrequency response signals. The multifrequency excitation signals are applied (68) at multiple positions within the internal cavity (14). The method (60) further includes performing a multifrequency phase analysis on the multifrequency response signals to inspect the internal cavity (14).

## Description

The invention relates generally to nondestructive testing and more specifically, to eddy current inspection of manufactured components.

Gas turbine engines include rotating shafts and disks, which support rotating blades in the fan, compressor, high pressure turbine, and low pressure turbine. The rotating components are subject to substantial centrifugal loads during operation, which generate corresponding stress that must be limited for maximizing component life. In addition, defects, flaws, or other anomalies in the material may be introduced during the original manufacture of the engine components, or may occur during the operational life thereof. Accordingly, the engine components are typically inspected during the manufacturing process, and during routine maintenance outages, for uncovering any anomaly therein, which might limit the useful life of the components.

A common, non-destructive inspection technique is eddy current (EC) inspection of typically metal components. An EC probe includes a small electrical coil mounted near the tip thereof through which an alternating current is generated, which in turn produces an eddy current in the component. The probe tip is moved along the surface of the component for inspection and is used to measure the interaction between the electromagnetic field and the component. A defect or geometric abnormality in the material, which changes the homogeneity thereof, will disturb the eddy current. The disturbed eddy current modifies the exciting current in the probe coil, and the modified current is then suitably detected and correlated to particular properties of the material to indicate the corresponding anomaly.

For example, eddy current inspection is commonly used for measuring residual stress, density, and degrees of heat treatment in typically metal components. It is also typically used for detecting physical defects or abnormalities on or near the material surface such as dents, bumps, or minute cracks in the material.

Crack detection is particularly important in turbine engine components since cracks may propagate under stress and substantially reduce the useful life of a component, and may eventually lead to component failure if not suitably accommodated. However, the typical eddy current inspection apparatus is specifically configured for inspecting external surfaces of the specimen, with any internal cavities or channels with complex geometry therein typically being inspected visually using an optical borescope. Small or minute cracks in an internal channel are difficult to detect visually, and can substantially reduce the useful life of the specimen.

For example, a high pressure turbine (HPT) blade includes a hollow airfoil fed with coolant through several inlet channels extending downwardly through the supporting dovetail thereof. The dovetail includes corresponding lobes having serpentine profiles. The external surfaces of the dovetail lobes may be readily inspected using conventional eddy current equipment, yet the internal channels in the dovetail are relatively small and effectively hide the surfaces thereof from ready access. In addition, the geometry effects of such internal cavities give rise to substantial noise in the response signal such that small cracks and other fine defects cannot be detected using conventional EC inspection techniques.

Therefore, there is a need for an improved EC inspection technique for inspection of internal cavities in manufactured parts having limited access. Further, it is desirable that the EC inspection technique be repeatable and capable of detecting small cracks.

In accordance with an embodiment of the invention, a method for inspecting an internal cavity in a part is provided. The method includes inserting a probe into the internal cavity. The method also includes controlling movement of the probe using a defined scan path to scan the probe over a region of interest in the internal cavity. The method further includes applying multiple multifrequency excitation signals to the probe to generate a number of multifrequency response signals. The multifrequency excitation signals are applied along the defined scan path within the internal cavity. The method also includes performing a multifrequency phase analysis on the multifrequency response signals to inspect the internal cavity.

In accordance with another embodiment of the invention, another method for inspecting an internal cavity in a part is provided. The method includes generating a defined scan path to inspect a region of interest within the internal cavity. The defined scan path is generated using a computer model of the part and a computer model of an eddy current probe. The method also includes inserting the eddy current probe into the internal cavity. The method further includes controlling movement of the probe using the defined scan path to scan the eddy current probe over the region of interest. The method also includes applying multiple excitation signals to the probe to generate a number of response signals. The excitation signals are applied along the defined scan path within the internal cavity. The method also includes analyzing the response signals to inspect the internal cavity.

In accordance with another embodiment of the invention, an inspection system is provided. The inspection system includes an eddy current probe configured to induce eddy currents in a part. The inspection system also includes an eddy current instrument coupled to the eddy current probe, wherein the eddy current instrument is configured to apply multiple excitation signals to the eddy current probe to generate a number of response signals. The inspection system further includes a robot coupled to the eddy current probe and configured to insert the eddy current probe into an internal cavity in the part and to scan the eddy current probe over a region of interest within the internal cavity in accordance with a defined scan path. The inspection system also includes a processor configured to analyze the response signals from the eddy current instrument to inspect the region of interest within the internal cavity of the part.

Various features, aspects, and advantages of the present invention will become better understood when the following detailed description is read with reference to the accompanying drawings in which like characters represent like parts throughout the drawings, wherein:
FIG. 1 is a diagrammatic illustration of an inspection system in accordance with embodiments of the invention;
FIG. 2 is a diagrammatic illustration of an eddy current probe as used in the inspection system in FIG. 1 for inspection of an internal cavity in accordance with embodiments of the invention;
FIG. 3 is a block diagram representation of the inspection system in FIG. 1;
FIG. 4 is a flow chart representing steps in an exemplary method for inspecting an internal cavity in a part in accordance with embodiments of the invention; and
FIG. 5 is a flow chart representing steps in another exemplary method for inspecting an internal cavity in a part in accordance with embodiments of the invention.

As discussed in detail below, embodiments of the invention include a system and methods for inspecting internal cracks. As used herein, the term 'internal cracks' refers to anomalies at a region of interest located inside a cavity on an internal surface, either on a convex airfoil side or on a concave airfoil side of a blade. The internal surface on the convex side of a part is more difficult to access from outside than the one on a concave side. Some non-limiting examples of the anomalies include cracks and pits.

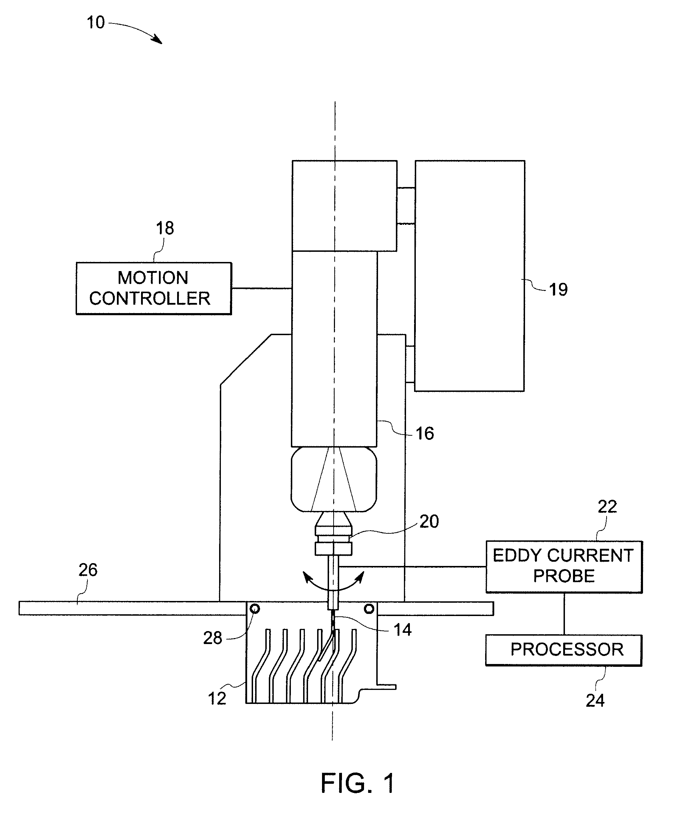

Turning to the drawings, FIG. 1 is a diagrammatic illustration of an inspection system 10 used to detect internal cracks in a part 12. In a particular embodiment, the part 12 is a blade used in an aircraft engine. The inspection system 10 includes an eddy current probe 14 configured to induce eddy currents in the part 12. The eddy current probe 14 may be moved relative to the part 12 by a robot 16. As used herein, the term 'robot' refers to a single or a multi-axis machine having varying degrees of freedom of automated motion. In an example, the robot 16 has at least six degrees of freedom. In an exemplary embodiment, the robot 16 is coupled to a motion controller 18 to automate movement of the eddy current probe 14. In another embodiment, the eddy current probe 14 is moved manually. In yet another embodiment, the part 12 may be moved relative to the eddy current probe 14 held stationery. The robot 16 precisely scans the eddy current probe 14 over a region of interest within an internal crack in the part 12 in accordance with a defined scan path. The defined scan path determines the relative movement of the probe 14 and the part 12. According to a particular embodiment, the defined scan path is determined such that a scan of the eddy current probe 14 satisfies multiple constraints. Some of the non-limiting examples of the constraints include a constant and direct contact of the eddy current probe 14 with a surface of the part 12, normal orientation of the probe 14 to the surface of the part 12, area of interest inspected is within the internal cavity or crack of the part 12, and a collision is avoided between the eddy current probe 14 and a remaining portion of the part 12. The defined scan path may also be referred to as a smooth scan path, which avoids an abrupt EC response to a sudden change in a path of the probe 14 and minimizes motion artifacts due to lift offs or part geometry. The abrupt eddy current response leads to an abrupt change in a signal potentially resulting in a false positive in a signal analysis of eddy current response to a defect. Thus, a smooth scan path increases robustness of a signal analysis for defect recognition. For the illustrated embodiment, the eddy current probe 14 also includes a probe holder 20 that facilitates registration of the probe 14 with respect to a coordinate system of the robot 16. The part 12 may be fixed to a planar surface 26 via fixtures 28. The fixtures 28 allow for registration of the part 12 with respect to the coordinate system of the robot 16.

The inspection system 10 also includes an eddy current instrument 22 coupled to the eddy current probe 14 that applies multiple excitation signals to the eddy current probe 14 to generate response signals corresponding to the internal crack in the part 12. A processor 24 coupled to the eddy current instrument 22 is configured to analyze the response signals from the eddy current instrument 22 to inspect the region of interest within the internal cavity of the part 12. In a particular embodiment, the eddy current instrument 22 is configured to supply the excitation signals at selective frequencies and the processor 24 is configured to perform a multifrequency phase analysis on the response signals to inspect the internal crack of the part 12. Multifrequency phase analysis is discussed in US Patent No. 7,206,706, Changting Wang et al, "Inspection Method and System Using Multifrequency Phase Analysis," which is hereby incorporated by reference in its entirety.

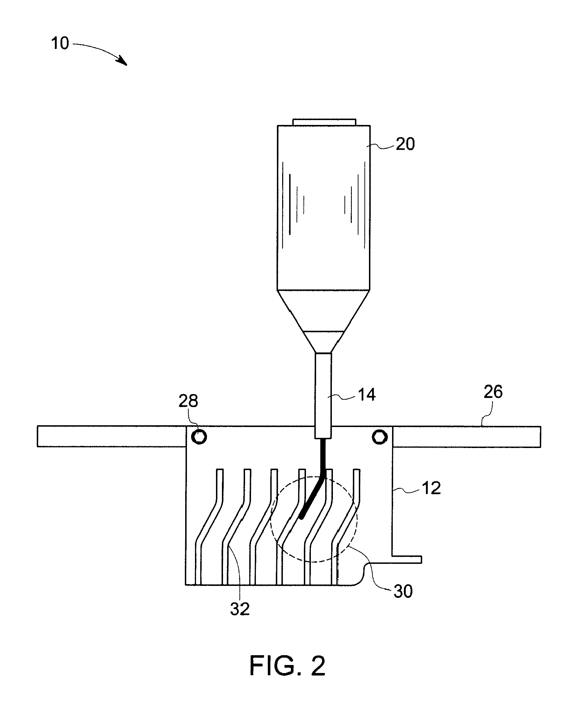

FIG. 2 is a diagrammatic illustration of a magnified view of the inspection system 10 in FIG. 1 including the eddy current probe 14 as referenced in FIG. 1. The eddy current probe 14 inspects an internal crack at or near a non-planar area 30 in the part 12 as referenced in FIG. 1 via an eddy current response signal. The eddy current response signal of an internal crack in the non-planar area 30 has a signal to noise ratio reduced by a response signal corresponding to background noise due to geometry effects of the area 30 and response of the probe 14 due to motion relative between the part 12 and the probe 14. In a non-limiting example, the response signal corresponding to background noise is produced due to a non-planar curvature change on the bottom 32. It is desirable for the eddy current response signal due to the internal crack to have a signal to noise ratio large enough to be detected over the response signal due to background noise. Multi-frequency phase analysis enables achieving such a signal to noise ratio. Further details of the multi frequency phase analysis may be obtained in U.S. Patent Application Publication Serial No. 11/210, 119 to Wang et al., entitled "Inspection of non-planar parts using multifrequency eddy current with phase analysis" and assigned to the same assignee. The eddy current probe 14 also includes a holder 20 as referenced in FIG. 1 for easy handling.

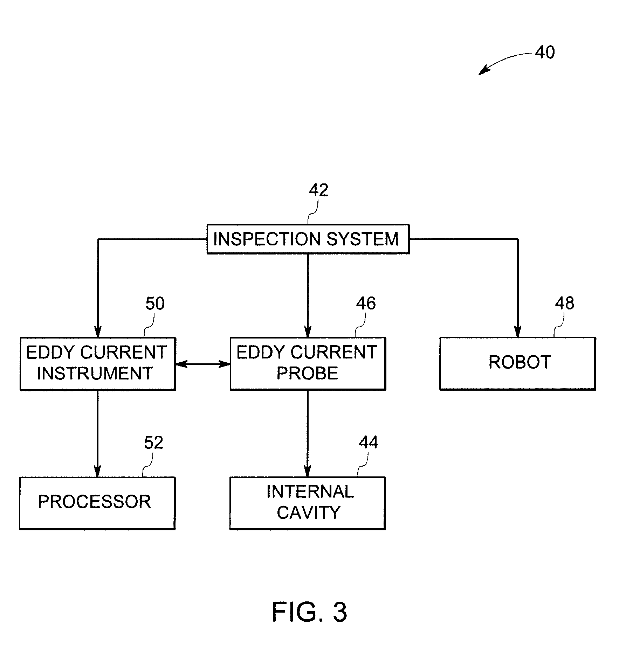

FIG. 3 is a block diagram representation 40 of components in an inspection system 42 for inspecting an internal cavity 44 in a part. The inspection system 42 includes an eddy current probe 46 that inspects the internal cavity 44 in a part. The eddy current probe 46 is actuated by a robot 48 that enables precise scanning motions. An eddy current instrument 50 is coupled to the eddy current probe 46 to apply multiple excitation signals in order to generate multifrequency eddy current response signals corresponding to the internal crack 44. A processor 52 is coupled to the eddy current instrument 50 to analyze the eddy current response signals generated by the internal cavity 44.

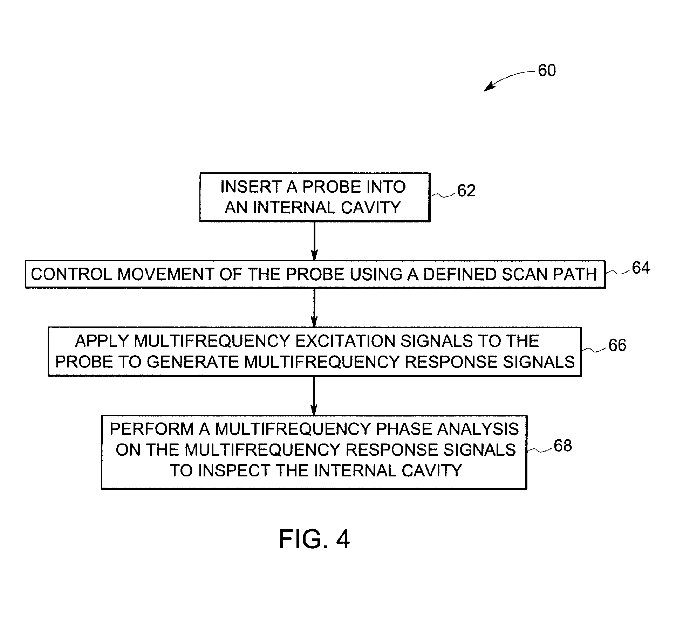

FIG. 4 is a flow chart representing steps in an exemplary method 60 for inspecting an internal cavity in a part. The method 60 includes inserting a probe into the internal cavity in step 62. Movement of the probe is controlled using a defined scan path to scan the probe over a region of interest in the internal cavity in step 64. In a particular embodiment, the movement is controlled by a robot. In another embodiment, the defined scan path is generated based on information of the part available via software and simulation in a computer with a model of the probe. The part geometry and probe geometry can be used to create a defined scan path free of collisions and ensure the region of interest is sufficiently scanned. In yet another embodiment, the defined scan path is generated to satisfy multiple constraints including enabling a constant contact of the probe with a surface of the part, orienting the probe in a normal direction to the surface of the part; inspecting an area of interest within the internal cavity of the part; and avoiding a collision between the probe and the part. In another embodiment, the defined scan path is generated using collision detection algorithms, potential field algorithms and virtual elastic algorithms.

Multiple excitation signals are applied to the probe scanning along the internal cavity to generate multifrequency response signals in step 66. In a particular embodiment, the excitation signals induce eddy currents with the eddy current probe in the part resulting in generation of the multifrequency response signals. A multifrequency phase analysis is performed on the multifrequency response signals to inspect the internal cavity in step 68. In an exemplary embodiment, information regarding a position of the probe is supplied and the multifrequency response signals are correlated with the information of the position to identify the location of inspection data within the internal cavity.

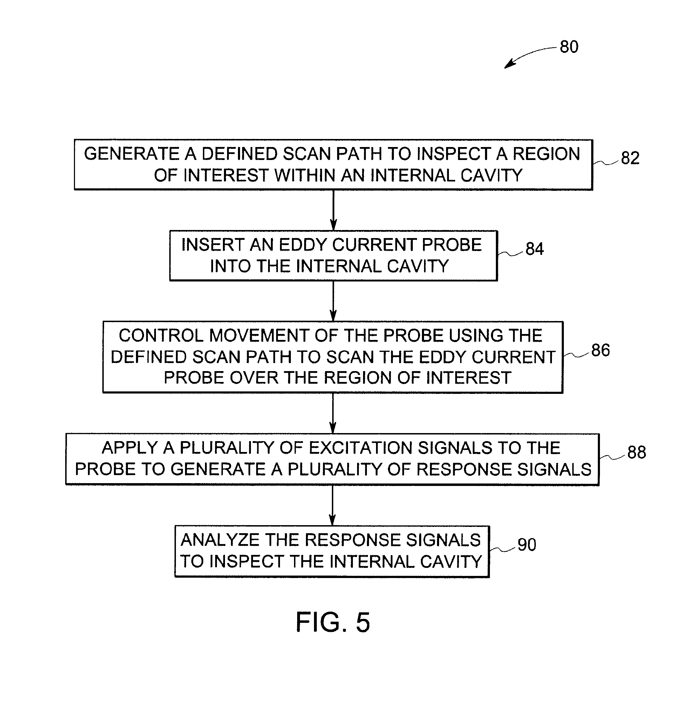

FIG. 5 is a flow chart representing steps in another exemplary method 80 for inspecting an internal cavity in a part. The method 80 includes generating a defined scan path to inspect a region of interest within the internal cavity, wherein the generating is performed using a computer model of the part and a computer model of an eddy current probe in step 82. A model-based technique for defined scan path generation is described in commonly assigned, copending US Patent Application Serial No. 11/100,106, to Shankarappa et al., entitled "Method for performing model based defined scan path generation of a component under inspection." In a particular embodiment, the defined scan path is generated to satisfy multiple constraints including enabling a constant contact of the probe with a surface of the part, orienting the probe in a normal direction to the surface of the part; inspecting an area of interest within the internal cavity of the part; and avoiding a collision between the probe and the part. In another embodiment, the defined scan path is generated using collision detection algorithms, potential field algorithms and virtual elastic algorithms.

An eddy current probe is inserted into the internal cavity in step 84. Movement of the eddy current probe is controlled using the defined scan path to scan the eddy current probe over the region of interest in step 86. In a particular embodiment, the movement is controlled by a robot. Multiple excitation signals are applied to the probe at multiple positions within the internal cavity to generate multifrequency response signals in step 88. The response signals are analyzed to inspect the internal cavity in step 90. In an exemplary embodiment, information regarding a position of the probe is supplied and the multifrequency response signals are correlated with the information of the position to identify the location of inspection data within the internal cavity. In another embodiment, the internal cavity inspected is on a convex side of the part.

The various embodiments of a system for inspecting internal cracks and a method for the same described above thus provide a way to achieve convenient, efficient and accurate detection of defects in areas that are not easily accessible. These systems also allow for highly efficient aircraft systems due to improved detection of internal cracks.

Of course, it is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

Furthermore, the skilled artisan will recognize the interchangeability of various features from different embodiments. For example, the use of an eddy current probe with respect to one embodiment can be adapted for detecting defects on a concave side of a part. Similarly, the various features described, as well as other known equivalents for each feature, can be mixed and matched by one of ordinary skill in this art to construct additional systems and techniques in accordance with principles of this disclosure.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A method (60) for inspecting an internal cavity (44) in a part (12), the method comprising:
inserting (62) a probe (14) into the internal cavity;
controlling (64) movement of the probe using a defined scan path to scan the probe over a region of interest in the internal cavity;
applying (66) a plurality of multifrequency excitation signals to the probe to generate a plurality of multifrequency response signals, wherein the applying step is performed along the defined scan path within the internal cavity; and
performing (68) a multifrequency phase analysis on the multifrequency response signals to inspect the internal cavity.

2. The method (60) of claim 1, wherein the probe is an eddy current probe.

3. The method (60) of any preceding claim, wherein the applying (66) step induces a plurality of eddy currents in the part, and wherein the multifrequency response signals are generated by the eddy currents induced in the part with the eddy current probe.

4. The method (60) of any preceding claim, wherein the defined scan path is generated to satisfy a plurality of constraints comprising:
enabling a constant contact of the probe with a surface of the part;
orienting the probe in a normal direction to the surface of the part;
inspecting an area of interest within the internal cavity of the part; and
avoiding a collision between the probe and the part.

5. A method (80) for inspecting an internal cavity (44) in a part (12), the method comprising:
generating (82) a defined scan path to inspect a region of interest within the internal cavity, wherein the generating is performed using a computer model of the part and a computer model of an eddy current probe (14);
inserting (84) the eddy current probe into the internal cavity;
controlling (86) movement of the probe using the defined scan path to scan the eddy current probe over the region of interest;
applying (88) a plurality of excitation signals to the probe to generate a plurality of response signals, wherein the applying step is performed at a plurality of positions within the internal cavity; and
analyzing (90) the response signals to inspect the internal cavity.

6. The method (80) of claim 5, further comprising supplying information regarding position of the probe, and correlating the response signals with the information of the position to identify the location of a plurality of inspection data within the internal cavity.

7. The method (80) of claim 5 or claim 6, wherein the generating of defined scan path comprises satisfying a plurality of constraints comprising:
enabling a constant contact of the eddy current probe with a surface of the part;
orienting the eddy current probe in a normal direction to the surface of the part;
inspecting an area of interest within the internal cavity of the part; and
avoiding a collision between the probe and the part.

8. An inspection system (10) comprising:
an eddy current probe (14) configured to induce eddy currents in a part (12);
an eddy current instrument (22) coupled to the eddy current probe (14), wherein the eddy current instrument (22) is configured to apply a plurality of excitation signals to the eddy current probe (14) to generate a plurality of response signals;
a robot (16) coupled to the eddy current probe (14) and configured to insert the eddy current probe (14) into an internal cavity (44) in the part (12) and to scan the eddy current probe (14) over a region of interest within the internal cavity (44) in accordance with a defined scan path; and
a processor (52) configured to analyze the response signals from the eddy current instrument (22) to inspect the region of interest within the internal cavity (44) of the part (12).

9. The inspection system (10) of claim 8, wherein the eddy current instrument (22) is configured to supply the excitation signals at selective frequencies, and wherein the processor (52) is configured to perform a multifrequency phase analysis on the response signals to inspect the region of interest within the internal cavity (44) of the part (12).

10. The system (10) of claim 8 or claim 9, wherein the defined scan path is configured to satisfy a plurality of constraints comprising:
direct contact of the probe (14) with a surface of the part (12);
normal orientation of the probe (14) to the surface of the part (12);
an area of interest inspected is within the internal cavity (44) of the part (12); and
a collision is avoided between the probe (14) and a remaining portion of the part (12).
